# EUROPÄISCHE PATENTSCHRIFT

(11) **EP 0 671 825 B1**
(45) Veröffentlichungstag und Bekanntmachung des Hinweises auf die Patenterteilung: **31.10.2001**
(21) Anmeldenummer: 95103233.3
(22) Anmeldetag: 07.03.1995
(51) Int. Cl.: H04B 7/26, H04J 3/06

(54) **Verfahren zur Synchronisation von Impulsrahmen**
Method for framesynchronisation
Méthode pour la synchronisation de trames

(30) Priorität: 09.03.1994 DE 4407794
(43) Veröffentlichungstag der Anmeldung: 13.09.1995
(73) Patentinhaber: ALCATEL, 75008 Paris (FR)
(72) Erfinder: Geywitz, Klaus, D-70839 Gerlingen (DE); Veloso, Artur, D-73035 Göppingen (DE)
(74) Vertreter: Müller, Joachim, Dipl.-Ing.

(56) Entgegenhaltungen:
- EP-A- 0 419 895
- EP-A- 0 437 835
- PATENT ABSTRACTS OF JAPAN vol. 013 no. 109 (E-727) ,15.März 1989 & JP-A-63 278436 (NEC CORP) 16.November 1988,

## Beschreibung

Die Erfindung betrifft ein Verfahren zur Synchronisation von Basisstationen, insbesondere in einem Telekommunikationssystem mit schnurlosen Endgeräten, kurz schnurloses Telekommunikationssystem genannt, dessen wesentliche Funktionen und Leistungsmerkmale von einem europäischen Standardisierungsgremium, dem European Telecommunications Standards Institute, kurz ETSI, als europäischer Standard für schnurlose Telekommunikation, kurz DECT-Standard, englisch Digital European Cordless Telecommunications-Standard, beschrieben wurden. Synchronisationsvorgänge sind erforderlich, um einen unterbrechungsfreien Kanalwechsel innerhalb einer Funkzelle zu gewährleisten oder in einer Mehrzellenumgebung infolge einer Ortsveränderung des schnurlosen Endgerätes den unterbrechungsfreien Übergang von einem ersten Zellenbündel zu einem zweiten Zellenbündel, sogenanntes handover, vornehmen zu können. Jede Funkzelle wird von einer Basisstation versorgt, die eine bestimmte Anzahl schnurloser Endgeräte gleichzeitig bedienen kann. Dazu wird das im DECT-Standard festgelegte Frequenzband in zehn Trägerfrequenzen aufgeteilt. Jeder dieser Träger ist in 24 Zeitschlitze unterteilt, wobei die ersten zwölf für die Übertragung von der Basisstation zum schnurlosen Endgerät, die verbleibenden zwölf für die umgekehrte Übertragungsrichtung genutzt werden. Das DECT-Hochfrequenzspektrum stellt somit 120 Vollduplexkanäle bereit. 24 Zeitschlitze werden jeweils zu einem DECT-Rahmen zusammengefaßt. Jeder Zeitschlitz ist in mehrere Felder unterteilt, wobei für den vorliegenden Sachverhalt das A-Feld zur Übertragung von Signalisierungsinformation und das B-Feld zur Übertragung von Nutzerdaten wesentlich sind. In dem A-Feld wird eine bestimmte Signalisierungskapazität zur Verfügung gestellt, die je nach Erfordernis einem im DECT-Standard definierten logischen Kanal, wie I-, C-, Q-, N-, M-, P-Kanal, zugeordnet wird. Da jeweils 16 DECT-Rahmen zu einem DECT-Multirahmen zusammengefaßt werden, werden die Daten der logischen Kanäle über diesen DECT-Multirahmen gemultiplext. Damit steht in einem DECT-Multirahmen jeder logische Kanal vollständig zur Verfügung, beispielsweise wird im achten DECT-Rahmen im Q-Kanal die Synchronisierungsinformation für den DECT-Multirahmen übertragen, die jedes schnurlose Endgerät eines Zellenbündels für seine Multirahmensynchronisation benötigt.

Für ein schnurloses Telekommunikationssystem mit mehreren Basisstationen wird im DECT-Standard ein Frequenzabtastalgorithmus beschrieben, der durch eine PSCN-Synchronisation, PSCN Abkürzung für Primary receiver Scan Carrier Number, realisiert werden kann. Da jede Basisstation über das gesamte, vom DECT-Standard zugewiesene Frequenzspektrum verfügt, stehen jeder Basisstation, wie oben ausgeführt, zehn Hochfrequenzträger zur Verfügung, wobei jeder in zwölf Vollduplex-Übertragungswege unterteilt ist. Mit dem PSCN-Algorithmus wird zwar vorgeschrieben, daß alle Basisstationen zum gleichen Zeitpunkt die gleiche Frequenz abtasten müssen, um mit einem schnurlosen Endgerät einen Zellenwechsel, auch als handover bezeichnet, vornehmen zu können, zur technischen Realisierung werden aber keine Angaben gemacht. Daraus ergibt sich die Aufgabe, ein Verfahren zur PSCN-Synchronisation anzugeben, das sich mit geringem Hardwareaufwand durchführen läßt.

Erfindungsgemäß wird diese Aufgabe durch das im ersten Anspruch angegebene Verfahren gelöst. Das Wesen der Erfindung besteht darin, daß fehlende Impulsübertragung als Information ausgewertet wird und Schaltungen zur Fehlererkennung in Baugruppen, die zur Verwaltung der Basisstationen dienen, multivalent genutzt werden.

Die Erfindung wird nachstehend an einem Ausführungsbeispiel erläutert. In der dazugehörigen Zeichnung zeigen
- Fig. 1: eine Konfiguration eines schnurlosen Telekommunikationssystems und
- Fig. 2: den prinzipiellen Aufbau eines DECT-Rahmens, eines DECT-Multirahmens und Impulse für die Rahmen-, Multirahmen- und PSCN-Synchronisation.

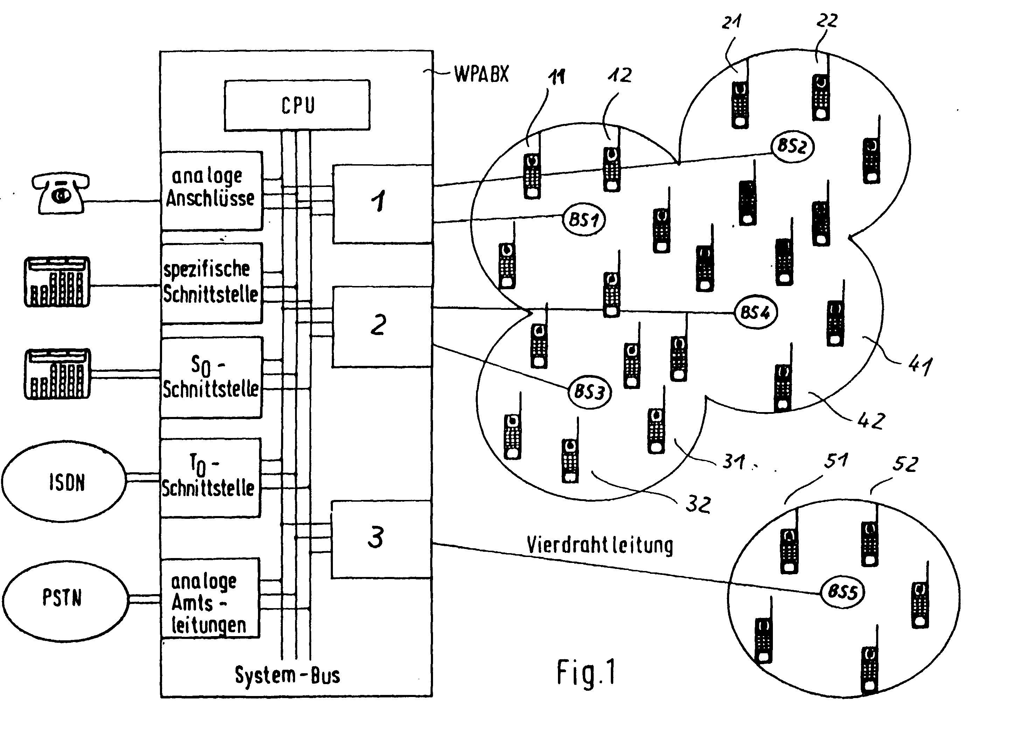

Gemäß Fig. 1 besteht ein schnurloses Telekommunikationssystem, hier eine schnurlose Nebenstellenanlage WPABX, Wireless Privat Area Branch Exchange, im wesentlichen aus einer Zentraleinheit CPU, die über einen Systembus unterschiedliche Schnittstellenschaltungen verwaltet. Eine solche Anlage ist als eigenständige Anlage zum Anschluß drahtgebundener und/oder schnurloser Endgeräte einsetzbar. Es ist aber auch möglich, die Anlage an bestehende Netze anzuschließen. Über die Schnittstellenschaltung für analoge Amtsleitungen ist der Anschluß an ein öffentliches Fernsprechnetz PSTN, Public Switched Telephone Network, möglich, über die T₀-Schnittstellenschaltung kann der Anschluß an ein diensteintegrierendes digitales Netz, ISDN, vorgenommen werden. An die DECT-Schnittstellenschaltungen 1, 2, 3 sind Basisstationen BS1...BS5 jeweils über Vierdrahtleitungen angeschlossen. Jede Basisstation BS1...BS5 versorgt jeweils eine Funkzelle und stellt in dieser die Funkverbindung zu den schnurlosen Endgeräten her. So befinden sich beispielsweise in dem in Fig. 1 dargestellten Zustand in der Funkzelle der Basisstation BS1 die schnurlosen Endgeräte 11, 12, in der Funkzelle der Basisstation BS2 die schnurlosen Endgeräte 21, 22 und in der Funkzelle der Basisstation BS3 die schnurlosen Endgeräte 31, 32. Jede DECT-Schnittstellenschaltung 1, 2, 3 enthält mindestens einen anwenderspezifischen Schaltkreis MAC-ASIC, an den jeweils eine Basisstation angeschlossen ist. Über die Vierdrahtleitung der DECT-Schnittstelle werden die Basisstationen gesteuert, synchronisiert und ferngespeist.

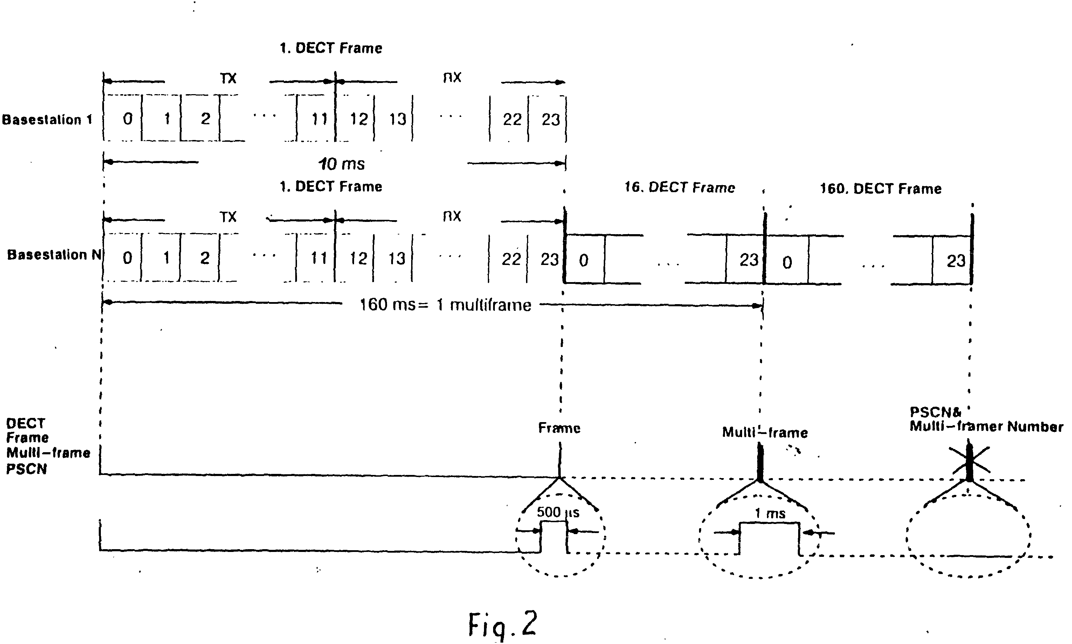

Um zu den schnurlosen Endgeräten eine Funkverbindung herstellen zu können, tastet jede Basisstation ihre Funkzelle mit den zur Verfügung stehenden zehn Hochfrequenzträgern nacheinander ab. Jede Frequenz wird für die Dauer eines DECT-Rahmens, also für die Dauer von 10ms, abgetastet. In einem Multirahmen werden somit 16 Frequenzen abgetastet, also die Frequenzen f1 bis f10 und f1 bis f6. Würde dieser Abtastrhythmus für jeden Multirahmen beibehalten werden, so würden die Frequenzen mit unterschiedlicher Häufigkeit abgetastet werden, die Frequenzen f7 bis f10 wären dabei benachteiligt. Deshalb ist es erforderlich, die Frequenzen fortlaufend für die Dauer von fünf Multirahmen abzutasten, da dann jede der zehn Frequenzen in einer Zeitdauer von 80 DECT-Rahmen achtmal abgetastet wird. Zwar ist jede DECT-Schnittstellenschaltung 1, 2, 3 für sich auf einen Multirahmenimpuls synchronisiert und eine fortlaufende Abtastung der Frequenzen an sich gewährleistet, es fehlt jedoch der Synchronismus untereinander. Das bedeutet, daß das schnurlose Endgerät bei einem Zellenbündelwechsel zwei zueinander asynchron arbeitende Basisstationen vorfindet. Es ist zwar grundsätzlich möglich, daß sich das schnurlose Endgerät auf die neue Basisstation synchronisiert, allerdings ist dazu eine relativ lange Zeitdauer und ein zusätzlicher Energieaufwand notwendig. Um einen schnellen handover-Vorgang mit geringem Energieaufwand durchführen zu können, werden die DECT-Schnittstellenschaltungen 1, 2, 3 auch untereinander synchronisiert. Diese Synchronisation der DECT-Schnittstellenschaltungen wird als PSCN-Synchronisation bezeichnet. Fig. 2 zeigt eine Übersicht zu dem Zusammenhang zwischen DECT-Rahmen, englisch DECT-Frame, Multirahmen, englisch Multiframe, und den zugehörigen Synchronisierimpulsen. Die PSCN-Synchronisation ist in Fig. 2 beim 10. Multirahmen dargestellt. Möglich ware eine PSCN-Synchronisation im Abstand von fünf Multirahmen und ganzzahligen Vielfachen davon. Der Abstand von zehn Multirahmen bewirkt vorteilhafterweise eine geringe Belastung der Zentraleinheit CPU.

Erfindungsgemäß erfolgt die PSCN-Synchronisation durch Ausblenden eines Multirahmensynchronisierimpulses. Dabei wird ausgenutzt, daß von der DECT-Schnittstellenschaltung ein Interrupt-Signal ausgelöst wird, wenn ein erwarteter Impuls ausbleibt. Dieses Interrupt-Signal dient üblicherweise zur Fehlererkennung. Läge aber ein Fehler vor, so würde nicht nur ein Multirahmensynchronisierimpuls fehlen, sondern auch DECT-Rahmensynchronisierimpulse. Somit kann das einmalige Fehlen eines Multirahmensynchronisierimpulses zur PSCN-Synchronisation aller DECT-Schnittstellenschaltungen ausgenutzt werden, so daß dann alle zu einer schnurlosen Telekommunikationsanlage gehörenden Basisstationen die Funkzellen zu gleichen Zeiten mit gleichen Frequenzen abtasten. Die PSCN-Synchronisation wird damit vorteilhafterweise ohne zusätzlichen Hardwareaufwand realisiert.

## Patentansprüche

1. Verfahren zur Synchronisation von Basisstationen, die mit sich in einer Nebenstellenanlage befindenden Schnittstellenschaltungen gekoppelt sind, welche Schnittstellenschaltungen Impulsrahmen zu den Basisstationen senden, welche Impulsrahmen pro Schnittstellenschaltung mittels Rahmensynchronisierimpulse synchronisiert werden, welche Impulsrahmen pro Nebenstellenanlage mittels Multirahmensynchronisierimpulse zu Multirahmen zusammengefassf und synchronisiert werden, **dadurch gekennzeichnet, dass** die Multirahmen durch Ausblenden eines der bestimmten Anzahl Multirahmensynchronisierimpulse synchronisiert werden.

2. Verfahren nach Anspruch 1, **dadurch gekennzeichnet, dass** bei einem nach dem DECT-Standard arbeitenden Telekommunikationssystem mit schnurlosen Endgeräten, der in diesem DECT-Standard beschriebene PSCN-Algorithmus, PSCN Abkürzung für Primary receiver Scan Carrier Number, bei einer Mehrzellenumgebung für alle Basisstationen durch zyklisches Ausblenden der jeweils ganzzahligen Vielfachen der fünften DECT-Multirahmenimpulse realisiert wird.

3. Verfahren nach Anspruch 2, **dadurch gekennzeichnet, dass** zur Erkennung des fehlenden Multirahmensynchronisierimpulses eine Fehlererkennungsschaltung dient.

4. Verfahren nach Anspruch 3, **dadurch gekennzeichnet, dass** von der Fehlererkennungsschaltung bei einem fehlenden DECT-Multirahmensynchronisierimpuls ein PSCN-Synchranisiersignal erzeugt wird und dass bei fehlendem DECT-Multirahmensynchronisierimpuls und fehlenden weiteren DECT-Rahmensynchronisierimpulsen ein Interruptsignal ausgelöst wird, das einen Übertragungsfehler anzeigt.

5. Nebenstellenanlage (WPABX) zur Sendung von Impulsrahmen zu Basisstationen, welche Nebenstellenanlage eine Zentraleinheit (CPU) enthält und Schnittstellenschaltungen (1,2,3) mit Schaltkreisen (MAC-ASIC) die mit den Basisstationen (BS1,BS2,BS3,BS4,BS5) koppelbar sind enthält, welche Impulsrahmen pro Schniftstellenschaltung mittels Rahmensynchronisierimpulse synchronisiert werden, welche Impulsrahmen pro Nebenstellenanlage mittels Multirahmensynchronisierimpulse zu Multirahmen zusammengefasst und synchronisiert werden, wobei die Zentraleinheit über einen Systembus die Schnittstellenschaltungen verwaltet, **dadurch gekennzeichnet, dass** die Zentraleinheit die Multirahmen durch Ausblenden eines der bestimmten Anzahl Multirahmensynchronisierimpulse synchronisiert.

6. Nebenstellenanlage nach Anspruch 5, **dadurch gekennzeichnet, dass** die Zentraleinheit, bei einem nach dem DECT-Standard arbeitenden Telekommunikationssystem mit schnurlosen Endgeräten, der in diesem DECT-Standard beschriebene PSCN-Algorithmus, PSCN Abkürzung für Primary receiver Scan Carrier Number, bei einer Mehrzellenumgebung für alle Basisstationen, durch zyklisches Ausblenden der jeweils ganzzahligen Vielfachen der fünften DECT-Multirahmenimpulse realisiert.

7. Nebenstellenanlage nach Anspruch 6, **dadurch gekennzeichnet, dass** die Nebenstellenanlage zur Erkennung des fehlenden Multirahmensynchronisierimpulses eine Fehlererkennungsschaltung enthält.

8. Nebenstellenanlage nach Anspruch 7, **dadurch gekennzeichnet, dass** die Fehlererkennungsschaltung bei einem fehlenden DECT-Multirohmensynchronisierimpuls ein PSCN-Synchronisiersignal erzeugt und dass bei fehlendem DECT-Multirahmensynchronisierimpuls und fehlenden weiteren DECT-Rahmensynchronisierimpulsen ein Interruptsignal ausgelöst wird, das einen Übertragungsfehler anzeigt.

9. Telekommunikationssystem mit Basisstationen (BS1,BS2,BS3,BS4,BS5) und mit mindestens einer Nebenstellenanlage (WPABX) zur Sendung von Impulsrahmen zu den Basisstationen, welche Nebenstellenanlage eine Zentraleinheit (CPU) enthält und Schnittstellenschaltungen (1,2,3) mit Schaltkreisen (MAC-ASIC) die mit den Basisstationen (BS1,BS2,BS3,BS4,BS5) koppelbar sind enthält, welche Impulsrahmen pro Schnittstellenschaltung mittels Rahmensynchronisierimpulse synchronisiert werden, welche Impulsrahmen pro Nebenstellenanlage mittels Multirahmensynchronisierimpulse zu Multirahmen zusammengefasst und synchronisiert werden, wobei die Zentraleinheit über einen Systembus die Schnittstellenschaltungen verwaltet, **dadurch gekennzeichnet, dass** die Zentraleinheit die Multirahmen durch Ausblenden eines der bestimmten Anzahl Multirahmensynchronisierimpulse synchronisiert.

10. Telekommunikationssystem nach Anspruch 9, **dadurch gekennzeichnet, dass** das Telekommunikationssystem ein nach dem DECT-Standard arbeitendes Telekommunikationssystem mit schnurlosen Endgeräten ist, wobei die Zentraleinheit der in diesem DECT-Standard beschriebene PSCN-Algorithmus, PSCN Abkürzung für Primary receiver Scan Carrier Number, bei einer Mehrzellenumgebung für alle Basisstationen, durch zyklisches Ausblenden der jeweils ganzzahligen Vielfachen der fünften DECT-Multirahmenimpulse realisiert.

## Claims

1. A method of synchronizing base stations which are coupled to interface circuits present in a private branch exchange, which interface circuits transmit pulse frames to the base stations, which pulse frames are synchronized by means of frame synchronization pulses in respect of each interface circuit, and which pulse frames are combined into multi-frames and synchronized by means of multi-frame synchronization pulses in respect of each private branch exchange,
**characterised in that** the multi-frames are synchronized by blanking one of the specified number of multi-frame synchronization pulses.

2. A method according to Claim 1,
**characterised in that** in a telecommunications system, operating in accordance with the DECT standard, with cordless terminals, the PSCN algorithm described in this DECT standard, where PSCN is an abbreviation for Primary receiver Scan Carrier Number, is implemented in a multi-cell environment for all the base stations by cyclic blanking of the respective integral multiples of the fifth DECT multi-frame pulses.

3. A method according to Claim 2,
**characterised in that** an error detection circuit serves to detect the absent multi-frame synchronization pulse.

4. A method according to Claim 3,
**characterised in that** in the absence of a DECT multi-frame synchronization pulse, a PSCN synchronization signal is generated by the error recognition circuit, and that in the absence of a DECT multi-frame synchronization pulse and of further DECT frame synchronization pulses, an interrupt signal, which indicates a transmission error, is released.

5. A private branch exchange (WPABX) for transmitting pulse frames to base stations, which private branch exchange contains a central unit (CPU) and contains interface circuits (1, 2, 3) comprising circuits (MAC-ASIC) which can be coupled to the base stations (BS1, BS2, BS3, BS4, BS5), which pulse frames are synchronized by means of frame synchronization pulses in respect of each interface circuit, and which pulse frames are combined to form multi-frames and synchronized by means of multi-frame synchronization pulses in respect of each private branch exchange, wherein the central unit manages the interface circuits via a system bus, **characterised in that** the central unit synchronizes the multi-frames by blanking one of the specified number of multi-frame synchronization pulses.

6. A private branch exchange according to Claim 5,
**characterised in that** in a telecommunications system, operating in accordance with the DECT standard, with cordless terminals, the central unit implements the PSCN algorithm described in this DECT standard, where PSCN is an abbreviation for Primary receiver Scan Carrier Number, in a multi-cell environment for all the base stations by cyclic blanking of the relevant integral multiples of the fifth DECT multi-frame pulses.

7. A private branch exchange according to Claim 6,
**characterised in that** the private branch exchange contains an error detection circuit for detecting the absent multi-frame synchronization pulse.

8. A private branch exchange according to Claim 7,
**characterised in that** in the absence of a DECT multi-frame synchronization pulse the error detection circuit generates a PSCN synchronization signal, and that in the absence of a DECT multi-frame synchronization pulse and of further DECT frame synchronization pulses, an interrupt signal, which indicates a transmission error, is released.

9. A telecommunications system with base stations (BS1, BS2, BS3, BS4, BS5) and with at least one private branch exchange (WPABX) for transmitting pulse frames to the base stations, which private branch exchange contains a central unit (CPU) and contains interface circuits (1, 2, 3) comprising circuits (MAC-ASIC) which can be coupled to the base stations (BS1, BS2, BS3, BS4, BS5), which pulse frames are synchronized by means of frame synchronization pulses in respect of each interface circuit, and which pulse frames are combined to form multi-frames and synchronized by means of multi-frame synchronization pulses in respect of each private branch exchange, wherein the central unit manages the interface circuits via a system bus, **characterised in that** the central unit synchronizes the multi-frames by blanking one of the specified number of multi-frame synchronization pulses.

10. A telecommunications system according to Claim 9,
**characterised in that** the telecommunications system is a telecommunications system, operating in accordance with the DECT standard, with cordless terminals, wherein the central unit implements the PSCN algorithm described in this DECT standard, where PSCN is an abbreviation for Primary receiver Scan Carrier Number, in a multi-cell environment for all the base stations by cyclic blanking of the respective integral multiples of the fifth DECT multi-frame pulses.

## Revendications

1. Procédé de synchronisation des stations de base, qui sont raccordées à des circuits d'interface situés dans une installation téléphonique privée, lesquels circuits d'interface émettent des trames d'impulsions vers les stations de base, lesquelles trames d'impulsions sont synchronisées pour chaque circuit d'interface au moyen des impulsions de synchronisation des trames, lesquelles trames d'impulsions sont regroupées en multitrames et synchronisées pour chaque installation téléphonique privée au moyen des impulsions de synchronisation des multitrames, **caractérisé en ce que** les multitrames sont synchronisées par la suppression de l'une, parmi le nombre déterminé, des impulsions de synchronisation des multitrames.

2. Procédé selon la revendication 1, **caractérisé en ce que**, dans un système de télécommunication comprenant des terminaux sans fil et fonctionnant selon la norme DECT, l'algorithme PSCN (PSCN étant l'abréviation de Primary receiver Scan Carrier Number), décrit dans cette norme DECT, est réalisé dans un environnement multicellulaire pour toutes les stations de base par la suppression cyclique de chaque multiple entier des cinquièmes impulsions des multitrames DECT.

3. Procédé selon la revendication 2, **caractérisé en ce qu'**un circuit de détection des erreurs est utilisé pour détecter l'impulsion de synchronisation des multitrames manquante.

4. Procédé selon la revendication 3, **caractérisé en ce que** le circuit de détection des erreurs émet un signal de synchronisation PSCN en cas d'absence d'une impulsion de synchronisation de multitrames DECT et **en ce qu'**un signal de coupure, qui signale une erreur de transmission, est émis pour une impulsion de synchronisation des multitrames DECT manquante et pour d'autres impulsions de synchronisation des trames DECT manquantes.

5. Installation téléphonique privée (WPABX) destinée à émettre des trames d'impulsions vers des stations de base, lesquelles installations téléphoniques privées comportent une unité centrale (CPU) et des circuits d'interface (1, 2, 3) munis de circuits de commutation (MAC-ASIC) qui peuvent être raccordés aux stations de base (BS1, BS2, BS3, BS4, BS5), lesquelles trames d'impulsions sont synchronisées pour chaque circuit d'interface au moyen des impulsions de synchronisation des trames, lesquelles trames d'impulsions sont regroupées en multitrames et synchronisées pour chaque installation téléphonique privée au moyen des impulsions de synchronisation des multitrames, l'unité centrale étant destinée à gérer les circuits d'interface par l'intermédiaire d'un bus système, **caractérisée en ce que** l'unité centrale synchronise les multitrames par la suppression de l'une, parmi le nombre déterminé, des impulsions de synchronisation des multitrames.

6. Installation téléphonique privée selon la revendication 5, **caractérisée en ce que** l'unité centrale, dans un système de télécommunication comprenant des terminaux sans fil et fonctionnant selon la norme DECT, réalise l'algorithme PSCN (PSCN étant l'abréviation de Primary receiver Scan Carrier Number), décrit dans cette norme DECT, dans un environnement multicellulaire pour toutes les stations de base par la suppression cyclique de chaque multiple entier des cinquièmes impulsions des multitrames DECT.

7. Installation téléphonique privée selon la revendication 6, **caractérisée en ce que** ladite installation téléphonique privée comporte un circuit de détection des erreurs destiné à détecter l'impulsion de synchronisation des multitrames manquante.

8. Installation téléphonique privée selon la revendication 7, **caractérisée en ce que** le circuit de détection des erreurs émet un signal de synchronisation PSCN en cas d'absence d'une impulsion de synchronisation des multitrames DECT et **en ce qu'**un signal de coupure, qui signale une erreur de transmission, est émis pour une impulsion de synchronisation des multitrames DECT manquante et pour d'autres impulsions de synchronisation des trames DECT manquantes.

9. Système de télécommunication comprenant des stations de base (BS1, BS2, BS3, BS4, BS5) et au moins une installation téléphonique privée (WPABX) destinée à émettre des trames d'impulsions vers les stations de base, lesquelles installations téléphoniques privées comportent une unité centrale (CPU) et des circuits d'interface (1, 2, 3) munis de circuits de commutation (MAC-ASIC) qui peuvent être raccordés aux stations de base (BS1, BS2, BS3, BS4, BS5), lesquelles trames d'impulsions sont synchronisées pour chaque circuit d'interface au moyen des impulsions de synchronisation des trames, lesquelles trames d'impulsions sont regroupées en multitrames et synchronisées pour chaque installation téléphonique privée au moyen des impulsions de synchronisation des multitrames, l'unité centrale étant destinée à gérer les circuits d'interface par l'intermédiaire d'un bus système, **caractérisé en ce que** l'unité centrale synchronise les multitrames par la suppression de l'une, parmi le nombre déterminé, des impulsions de synchronisation des multitrames.

10. Système de télécommunication selon la revendication 9, **caractérisé en ce que** le système de télécommunication est un système de télécommunication comprenant des terminaux sans fil et fonctionnant selon la norme DECT, l'unité centrale réalisant l'algorithme PSCN (PSCN étant l'abréviation de Primary receiver Scan Carrier Number), décrit dans cette norme DECT, dans un environnement multicellulaire pour toutes les stations de base par la suppression cyclique de chaque multiple entier des cinquièmes impulsions des multitrames DECT.
